# EUROPÄISCHE PATENTANMELDUNG

(11) **EP 4 269 844 A1**
(43) Veröffentlichungstag der Anmeldung: **01.11.2023**
(21) Anmeldenummer: 23170782.9
(22) Anmeldetag: 28.04.2023
(51) Int. Cl.: F16K 3/26, F16K 47/04, F16K 47/08

(54) **VENTILSITZ, HUBVENTILGLIED UND HUBVENTIL**

(30) Priorität: 29.04.2022 DE 202022102340 U
(71) Anmelder: Samson Aktiengesellschaft, 60314 Frankfurt am Main (DE)
(72) Erfinder: WAID, Jonas, 64283 Darmstadt (DE); DOMAGOJ, Vnucec, 68549 IIvesheim (DE)
(74) Vertreter: Schmid, Nils T.F.

(57) **Zusammenfassung**

Ein Hubventil (100) für eine prozesstechnischen Anlage, wie eine chemischen Anlage, insbesondere eine petrochemische Anlage, ein Kraftwerk, eine Brauerei oder dergleichen, mit einem Ventilgehäuse (101), welches einen Einlasskanal (103), einen Auslasskanal (107), einen Brückenabschnitt (105) mit einer Durchgangsöffnung (150) und einen Halsbereich (109) aufweist, mit einem in dem Brückenabschnitt (105) angeordneten Ventilsitz (1, 2) mit einem mit dem Ventilsitz (1, 2) kooperierenden Hubventilglied (5, 6) das einen zylindrischen Innenhohlraum (50) umfasst, wobei das Hubventilglied (5, 6) in Axialrichtung (A) relativ zu dem Ventilsitz (1, 2) beweglich ist, ist ausgestattet mit einer Umlenkung, wie ein Umlenkprofil an dem Hubventilglied (5, 6) und/oder einen Umlenkkanal (17) an oder in dem Ventilsitz (1, 2), zum Umlenken von innerhalb des Innenhohlraums (50) angeordnetem Prozessfluid und/oder zum Beeinflussen einer Hauptströmungsrichtung des Prozessfluids im Bereich der Durchgangsöffnung (150).

## Beschreibung

Die Erfindung betrifft ein Hubventil für eine prozesstechnischen Anlage, wie eine chemische Anlage, insbesondere eine petrochemische Anlage, ein Kraftwerk, eine Brauerei oder dergleichen. Die Erfindung betrifft auch ein Hubventilglied und/oder einen Ventilsitz für ein solches Hubventil.

Hubventile haben im Allgemeinen ein Ventilgehäuse, das einen Einlasskanal, einen Auslasskanal, einen Brückenabschnitt mit einer Durchgangsöffnung und einem Halsbereich umfasst, wobei der Ventilsitz am Brückenabschnitt die Durchgangsöffnung umgebend montiert ist, üblicherweise angeschraubt. Das Hubventilglied ist im Allgemeinen in einer Hubrichtung oder Axialrichtung translationsbeweglich relativ zu dem Ventilsitz beweglich, um eine Prozessfluidströmung durch das Hubventil einzustellen. Das Hubventilglied ist üblicherweise über eine Stellstange an einem Aktor zum Betätigen des Ventilgliedes verbunden. Die Stellstange ist in der Axialrichtung ausgerichtet und im Allgemeinen durch den Halsbereich aus dem Ventilgehäuse hinaus zu dem Aktor geführt. Die Einlass- und Auslass-Geometrie solcher Hubventile sind geprägt von dem senkrecht auf der Einlass-Auslass-Mittelachse des Hubventils angeordneten Hubventilglied und Ventilsitz. Durch die mehrfache Umlenkung der Prozessströmung zwischen dem Einlass und dem Auslass entsteht grundsätzlich ein Strömungswiderstand, welcher im Wesentlichen durch Umlenkungen und Wirbelbildungen verursacht wird. Ein solches Hubventil mit einem als Lochkegel ausgeführten Hubventilglied und dazu korrespondierendem Ventilsitz beschreibt DE 10 2018 114 316 A1.

Andere Hubventile werden in US 2005/0061375 1 WO 97/18411 A1, EP 3 199 852 A1 und EP 1552 202 B1 beschrieben.

Bei manchen Hubventilen tritt ein unerwünschter Druckabfall bzw. Strömungswiderstand infolge von Strudeln oder Wirbeln im Bereich der vom Ventilsitz umgebenen Durchgangsöffnung auf, besonders wenn dort eine sich weit in der Axialrichtung erstreckende rohrförmige Führung für das Hubventilglied angeordnet ist. Der rohrförmige Teil für die zusätzliche Führung im Ventilsitz, neigt dazu Wirbel um die Kegelstangenachse auszulösen. Solche Wirbel verursachen erhebliche Druckverluste vor der Drosselstelle und verschlechtern die Durchströmung des ringförmigen Durchgangsquerschnitts zwischen Schließfläche des Hubventilglieds, das als Kegel bezeichnet sein kann, und zur Schließfläche korrespondierender Anschlagfläche des Ventilsitzes. Letzteres liegt an den teils hohen Strömungsgeschwindigkeiten orthogonal zum Durchgangsquerschnitt. Im Vergleich zu theoretisch erwarteten Kv-Werten können an dieser Stelle hier Reduzierungen von bis zu 30% festgestellt worden. Aus der sich hieraus ergebenden Unstetigkeit in der Kennlinie des Hubventils folgt ein schlechtes Regelverhalten.

Es ist eine Aufgabe der Erfindung, einen Ventilsitz für ein Hubventil, ein Hubventilglied für ein Hubventil und/oder ein Hubventil bereit zu stellen, das die Nachteile des Stands der Technik überwindet, insbesondere eine stetige Hubventil-Kennlinie aufweist und/oder Wirbelbildung im Bereich der Durchgangsöffnung entgegen wirkt. Diese Aufgabe lösen die Gegenstände der unabhängigen Ansprüche.

Demnach ist ein Ventilsitz für ein Hubventil einer prozesstechnischen Anlage vorgesehen. Die prozesstechnische Anlage kann beispielsweise eine chemische Anlage, insbesondere eine petrochemische Anlage, ein Kraftwerk, oder eine Lebensmittel verarbeitende Anlage wie eine Brauerei, oder dergleichen sein. Der Ventilsitz ist ausgelegt und eingerichtet zur Verwendung in einem Hubventil des Typs, dass mit einem Ventilgehäuse ausgestattet ist, welches einen Einlasskanal, einen Auslasskanal, einen Brückenabschnitt mit einer Durchgangsöffnung und einen Halsbereich umfasst. Der Ventilsitz ist derart am Brückenabschnitt montierbar, dass die Durchgangsöffnung mit einem zum Ventilsitz korrespondierenden Hubventilglied verschließbar ist. Der Einlasskanal beschreibt üblicherweise einen gewölbten Bogen, der zu einem Gehäusevolumen unterhalb der Durchgangsöffnung führt. Der Auslasskanal beschreibt typischerweise einen entgegengesetzt zum Einlasskanal gewölbten Bogen, der bei der Durchgangsöffnung beginnt. Die Durchgangsöffnung hat üblicherweise eine Mittelachse, die zur Hubachse bzw. Stellrichtung der Stellstange korrespondiert. Der Einlasskanal und der Auslasskanal sind häufig an ihrer jeweiligen Einlass- beziehungsweise Auslassöffnung am jeweiligen von der Durchgangsöffnung entfernten Ende quer, beispielsweise senkrecht, zur Mittelachse ausgerichtet und können parallel oder sogar koaxial zu einander ausgerichtet sein. Optional kann das Hubventilglied als erfindungsgemäßes Hubventilglied wie nachfolgend ausgeführt realisiert sein. Alternativ kann der erfindungsgemäße Ventilsitz mit einem konventionellen Hubventilglied kombinierbar sein, wobei insbesondere dessen Innenseite einen Innenhohlraum umgibt und frei von einem Umlenkprofil und/oder rotationssymmetrisch geformt ist. Ein Hubventil mit erfindungsgemäßem Ventilsitz wird nachfolgend im Detail beschrieben.

Der Ventilsitz umfasst einen Hülsenkörper und eine Anschlagfläche zum verschließenden kooperieren mit dem Hubventilglied. Der Hülsenkörper des Ventilsitzes ist hohlzylindrisch und definiert eine Axialrichtung. Zumindest im Bereich des Ventilsitzes ist der Hülsenkörper kreisringförmig, um kooperierend mit der Durchgangsöffnung im Brückenabschnitt des Ventilgehäuses eine Durchlassöffnung für das Prozessfluid zu definieren. Die Durchlassöffnung ist durch das Hubventilglied teilweise oder, vorzugsweise vollständig, verschließbar. In einem verschlossenen Zustand des Hubventils, in welchem das Hubventilglied verschließen mit dem Ventilsitz kooperiert, ist ein Durchfluss des Prozessfluides durch das Hubventil vorzugsweise vollständig unterbunden. Vorzugsweise ist ein Dichtmittel zwischen dem Ventilsitz und dem Ventilgehäuse angeordnet, um eine Prozessfluid-Leckage durch die Durchgangsöffnung im Bereich der Kontaktflächen zwischen Ventilsitz und Ventilgehäuse zu verhindern. Vorzugsweise ist der Hülsenkörper des Ventilsitzes zumindest im Bereich der Anschlagfläche rotationssymmetrisch bezüglich einer Mittelachse oder Mittelpunktlinie, die vorzugsweise entsprechend der Axialrichtung orientiert ist.

Die Anschlagfläche zum schließenden Kooperieren mit einem relativ zum Ventilsitz linearbeweglichen Hubventilglied ist in einem oberen Bereich, insbesondere einem ersten axialen Endbereich, des Hülsenkörpers angeordnet. Insbesondere verjüngt sich die Anschlagfläche des Ventilsitzes, vorzugsweise in Schließrichtung des Hubventils und/oder nach unten, insbesondere in Richtung des zum ersten axialen Endbereich gegenüberliegenden zweiten Endbereich (hier: nach unten). Eine sich verjüngende Anschlagfläche des Ventilsitzes hat vorzugsweise eine nach oben größer werdende lichte Weite. Vorzugsweise ist der Ventilsitz derart am Brückenabschnitt montierbar, dass der obere Bereich, insbesondere der erste axiale Endbereich, und die daran vorgesehene Anschlagfläche in Richtung von dem Brückenabschnitt auf den Halsbereich und/oder das Hubventilglied gerichtet ist. Vorzugsweise ist das Hubventilglied von dem Typ, dessen Schließkörper eine Schließfläche zum abdichtenden kooperieren mit der Anschlagfläche des Ventilsitzes und eine an die Schließfläche in Axialrichtung anschließenden zylinderhülsenförmigen Wandabschnitt aufweist, wobei der Wandabschnitt einen Innenhohlraum vollumfänglich umgibt und wobei in dem Wandabschnitt radiale Durchgangskanäle für das Prozessfluid vorgesehen sind.

Im Folgenden kann der "obere" Endbereich als erster axialen Endbereich und der "untere" Endbereich als zweiter axiale Endbereich bezeichnet werden, wobei die Bezeichnungen "oben" und "unten" in Relation zu einander zu verstehen sind und nicht einschränkend im Hinblick auf einen Einbauzustand eines Hubventils. Der Fachmann weiß, dass ein Hubventil mit darin vorgesehenem Ventilsitz in einer prozesstechnischen Anlage in verschiedenen Orientierungen betriebsgemäß einsetzbar sein kann.

Der Ventilsitz weist eine radial innenseitige Führungsfläche zum Abstützen des Hubventilglieds am Ventilsitz in einer zumindest teilweise geöffneten Stellung des Hubventilglieds auf. Die Führungsfläche ist dazu ausgelegt, im axialen Bereich des Brückenabschnitts anzuordnen. Die Führungsfläche ist vorzugsweise in dem axialen Bereich des Brückenabschnitts angeordnet oder anordenbar. Insbesondere kann der Ventilsitz derart auf das Ventilgehäuse des Hubventils abgestimmt sein, dass in einem betriebsgemäßen Einbauzustand des Ventilsitzes die Stellung der Führungsfläche zumindest teilweise oder vollständig in dem Bereich des Brückenabschnitts angeordnet ist, beispielsweise durch wenigstens eine Positionierhilfe in dem Hubventil, insbesondere am Ventilsitz und/oder am Ventilgehäuse. Vorzugsweise die Führungsfläche zumindest teilweise formkomplementär, insbesondere gemäß einer Spiel- oder Gleitpassung, zu einem Führungsabschnitt des Hubventilglieds ausgelegt, der den Außenumfang des Wandabschnitts bildet.

Erfindungsgemäß ist vorgesehen, dass der Hülsenkörper wenigstens einen Umlenkkanal aufweist, der an der Führungsfläche mündet. Der wenigstens eine Umlenkkanal ist im Wesentlichen radial ausgerichtet. Optional kann wenigstens ein Umlenkkanal in Bezug auf die axiale Richtung mit einem Neigungswinkel angeordnet sein, wobei der wenigstens eine Umlenkkanal an seiner Mündungsöffnung nach oben oder nach unten geneigt sein kann. Der Umlenkkanal kann eine radiale Ausrichtung aufweisen, insbesondere einer radial ausgerichtete Einlassöffnung fern der Führungsfläche, eine radial ausgerichtete Mündungsöffnung an der Führungsfläche und/oder einen radial abgerechneten Röhrenabschnitt aufweisen. Die radiale Ausrichtung des wenigstens einen Umlandkanals ist im Allgemeinen quer zu der Axialrichtung orientiert, insbesondere ist die radiale Ausrichtung orthogonal zur Axialrichtung orientiert. Der Umlenkkanal mündet an der Führungsfläche, um Prozessfluid ggf. zu einem radialen Innenhohlraum des Hubventilglieds zu führen, insbesondere um Prozessfluid in den radialen Innenhohlraum hinein zu führen. Der Umlenkkanal ist dazu ausgelegt und eingerichtet, Prozessfluid zum oder in den radialen Innenhohlraum zu führen, um Prozessfluid, dass sich innerhalb des Hohlraums befindet, umzulenken. Alternativ oder zusätzlich ist der Umlenkkanal dazu ausgelegt und eingerichtet, Prozessfluid zum oder in den radialen Innenhohlraum zu führen, um eine Hauptströmungsrichtung des Prozessfluids im Bereich der Durchgangsöffnung zu beeinflussen. Insbesondere ist durch den wenigstens einen Umlenkkanal in einem teilweise geöffneten Zustand und/oder in einem vollständig geöffneten Zustand eine Umlenkung von Prozessfluide mit Innenhohlraum und/oder eine Beeinflussung der Hauptströmungsrichtung gewährleistet. Durch wenigstens einen Umlenkkanal oder mehrere Umlenkkanäle kann dem Prozessfluid im Innenraum des Hülsenkörpers, der als das Sitzinnere bezeichnet sein kann, oder Innenhohlraum des Ventilgliedes eine Strömungskomponente aufgeprägt werden, die das dort fließende Prozessfluid umlenkt. Der Hülsenkörper, insbesondere der Abschnitt des Hülsenkörpers, in dem der wenigstens eine Umlenkkanal angeordnet ist, kann zweckmäßigerweise in einem additiven Fertigungsverfahren oder in einem Gussverfahren hergestellt sein. Der Ventilsitz ist vorzugsweise derart auf das Hubventilglied abgestimmt, dass in einer teilweise geöffneten Stellung des Hubventils zumindest ein Teil der Durchgangsöffnungen in der Axialrichtung im Bereich der wenigstens einen Umlenköffnung angeordnet ist, sodass Prozessfluid durch den wenigstens einen Umlenkkanal und vorzugsweise unmittelbar anschließend durch wenigstens einen Durchgangskanal in den Innenhohlraum strömen kann.

Mit Hauptströmungsrichtung kann insbesondere eine Durchschnitts- oder Median-Strömungsrichtung von Prozessfluid durch den Hülsenkörper in einem teilweise oder vollständig geöffneten Zustand des Hubventils bezeichnet sein. Die Hauptströmungsrichtung kann insbesondere als Hauptströmung-Vektor beschrieben werden anhand einer axialen Strömung-Vektorkomponente parallel zu der Axialrichtung, einer Querströmungs-Vektorkomponente quer zur Axialrichtung, insbesondere in Richtung von dem Einlasskanal zu dem Auslasskanal, und/oder einer Wirbelströmungs-Vektorkomponente bzw. umfänglichen Strömungs-Vektorkomponente in Bezug auf die Axialrichtung. Die Prozessfluid-Hauptströmung fließt im Wesentlichen von unten nach oben oder von oben nach unten durch den hohlzylindrischen Hülsenkörper, insbesondere in einem zylindrischen, durch die Führungsfläche begrenzten Volumen. Im Unterschied dazu fließt eine Prozessfluid-Querströmung oder -Bypassströmung aus seitlicher Richtung durch den Umlenkkanal in den Innenraum des hohlzylindrischen Hülsenkörpers hinein, um aus seitlicher bzw. quer-Richtung mit der Hauptströmung zu kollidieren. Die durch den wenigstens einen Umlenkkanal bereitgestellte Querströmung, die mit Hauptströmung kollidiert, wirkt einer Wirbelbildung im Bereich des Ventilsitzes entgegen. Eine Wirbelbildung im Bereich des Ventilsitzes wäre geprägt durch eine starke oder überwiegender Wirbelströmung-Vektorkomponente der Hauptströmungsrichtung. Die Querströmung verstärkt die axiale Strömung-Vektorkomponente der Hauptströmungsrichtung.

Mithilfe des erfindungsgemäßen Ventilsitzes kann durch den Umlenkkanal eine Strudelbildung im Innenraum des Ventilsitzes reduziert und so der KV-Wert des Hubventils unabhängig vom eingestellten Drosselquerschnitt, von einer gewünschten Durchflussrate und/oder einem gewünschten Druckgradienten maximiert werden.

Bei einer bevorzugten Ausführung eines erfindungsgemäßen Ventilsitzes ist ein vom unteren Stirnende des Hülsenkörpers zum Umlenkkanal führender Axialkanal radial zwischen der Führungsfläche und dem Brückenabschnitt und/oder einem Montageabschnitt angeordnet. Insbesondere ist der Axialkanal ringnutförmig. Vorzugsweise kann ein ringnutförmiger Axialkanal vollumfänglich am unteren Stirnende des Hülsenkörpers gebildet sein. Der ringnutförmiger Axialkanal ist insbesondere radial innenseitig von einer Innenwand und/oder radial außenseitig von einer Außenwand eingerahmt, wobei vorzugsweise die Außenwand und/oder die Innenwand in Materialeinheit, besonders bevorzugt einstückig mit dem Hülsenkörper gebildet ist bzw. sind. Der Umlenkkanal erstreckt sich vorzugsweise vom Axialkanal zur Führungsfläche. Vorzugsweise weist der wenigstens eine Umlenkkanal eine radial außenseitige Einlassöffnung auf, die in den Axialkanal mündet. Es ist denkbar, dass ein Hülsenkörper mehrerer Axialkanäle umfasst, wobei jedem Axialkanal wenigstens je ein Umlenkkanal zugeordnet sein kann.

Gemäß einer bevorzugten Weiterbildung eines erfindungsgemäßen Ventilsitzes mit wenigstens oder genau einem Axialkanal mehrere Umlenkkanäle, die in den wenigstens einen oder in den einen einzigen Axialkanal münden. Mehrere in wenigstens einen, vorzugsweise denselben, Axialkanal mündende Umlenkkanäle können in der Axialrichtung relativ zueinander versetzt angeordnet sein. Zusätzlich oder alternativ können zwei oder mehr in den selben Axialkanal mündende Umlenkkanäle in Umfangsrichtung relativ zueinander versetzt sein, soweit der Axialkanal wenigstens eine entsprechende Umfangserstreckung aufweist. Mehrere in denselben Axialkanal mündende Umlenkkanäle können als Umlenkkanalgruppen bezeichnet sein. Es ist denkbar, dass ein Ventilsitz mit mehreren Axialkanäle ausgestattet ist, wobei die Axialkanäle je mindestens einem jeweiligen Umlenkkanal oder einer jeweiligen Umlenkkanalgruppe zugeordnet sind. Mehrere Umlenkkanäle eines Ventilsitzes, die in unterschiedliche Axialkanäle des Ventilsitzes münden, können in Axialrichtung und/oder in Umfangsrichtung relativ zueinander versetzt in dem Hülsenkörper angeordnet sein. Bei einem Hülsenkörper mit mehreren Axialkanälen können die einzelnen Axialkanäle beispielsweise als ringabschnittsförmige Nuten, Sacklochbohrung oder dergleichen gebildet sein, die sich vorzugsweise ausgehend vom unteren Stirnende des Hülsenkörpers in der Axialrichtung nach oben ausdehnen.

Gemäß einer Ausführung eines erfindungsgemäßen Ventilsitzes weist der Umlenkkanal eine runde, insbesondere kreisförmige, oder polygonale Querschnittsfläche auf. Die Querschnittsfläche des Umlenkkanals kann im Bereich am an der Einlassöffnung und der Mündungsöffnung gleich groß sein. Insbesondere ist die Querschnittsfläche des Umlenkkanals in einem Röhrenabschnitt, der sich von seiner Einlassöffnung zu seiner Mündungsöffnung erstreckt, konstant. Durch eine polygonale Querschnittsfläche mit abgerundeten Ecken oder eine runde Querschnittsfläche des Umlenkkanals kann das Prozessfluid besonders effizient in der radialen Richtung ins Innere bzw. den Innenraum geführt werden, um das dortige Prozessfluid umzulenken und die Hauptströmungsrichtung zu beeinflussen. Die lichte Weite, insbesondere der Durchmesser, der Querschnittsfläche kann im Wesentlichen der sich radialer Richtung erstreckende Länge des jeweiligen Umlenkkanals entsprechen. Es kann bevorzugt sein, dass die Länge des jeweiligen Umlenkkanals wenigstens 0,5-mal, insbesondere wenigstens 0,75-mal, und/oder nicht mehr als 2-mal, insbesondere nicht mehr als 1,5-mal so groß ist wie dessen lichte Weite. Es hat sich gezeigt, dass diese Weise eine Optimierung zwischen möglichst geringem Reibungsverlust und möglichst guter Ausrichtung der Prozessfluideinbringung realisierbar ist.

Bei einer anderen Ausführung eines erfindungsgemäßen Ventilsitzes, die mit den vorigen kombinierbar ist, weist der Hülsenkörper einen in der Axialrichtung unterhalb der Anschlagfläche angeordneten, radial außenseitigen Montageabschnitt zum Befestigen des Ventilsitzes an einem Ventilgehäuse auf. Insbesondere ist die Führungsfläche in der Axialrichtung zumindest teilweise im Bereich des Montageabschnitts angeordnet. Es kann bevorzugt sein, dass sich die Führungsfläche eine größere Erstreckung in der Axialrichtung aufweist als die Erstreckung der Anschlagfläche in der Axialrichtung, wobei besonders bevorzugt die Erstreckung der Führungsfläche in der Axialrichtung wenigstens fünfmal, insbesondere wenigstens zehnmal, vorzugsweise wenigstens 20-mal, so groß ist wie die Erstreckung der Anschlagfläche in der Axialrichtung. Der Montageabschnitt ist in der Axialrichtung relativ zu der Anschlagfläche in Richtung des zweiten axialen Endes versetzt. Der Montageabschnitt kann beispielsweise mit einem Außengewinde versehen sein, um den Ventilsitz in ein korrespondierendes Innengewinde des Ventilgehäuses ein zu schrauben. Alternativ oder zusätzlich, kann es vorgesehen sein, dass der Ventilsitz am Montageabschnitt mit einer äußeren Oberfläche ausgestattet ist, die gemäß einer Passung in die Durchgangsöffnung einsetzbar ist, beispielsweise einer Spielpassung und/oder einer Gleitpassung. Es kann bevorzugt sein, dass der Hülsenkörper im Bereich des Montageabschnitts vollumfänglich als kreisringförmiger Vollkörper gebildet ist. Vorzugsweise bildet derselbe Vollkörper den Montageabschnitt und die Anschlagfläche sowie gegebenenfalls die mehreren Zapfen. Die Außenseite des Hülsenkörpers in dem radial außenseitigen Montageabschnitt ist insbesondere rotationssymmetrisch. Es kann bevorzugt sein, dass der hohlzylindrischen Hülsenkörper, insbesondere die Anschlagfläche und/oder der Montageabschnitt, eine Ringfläche rings um die Mittelachse aufspannt, die einen insbesondere konstanten Ringflächen-Innendurchmesser und einen insbesondere konstanten Ringflächen-Außendurchmesser definiert. Es kann bevorzugt sein, dass der Montageabschnitt bezüglich des Brückenabschnitts und/oder der Durchgangsöffnung des Ventilgehäuses formabgestimmt ist, insbesondere dass die Axialerstreckung des Montageabschnitts der axialen Dicke des Brückenabschnitts und/oder der axialen Tiefe der Durchgangsöffnung entspricht. Das erste axiale Ende des Ventilsitzes kann an einer Oberseite des Brückenabschnitts angeordnet oder anordenbar sein, insbesondere flanschartig darauf aufliegen oder auflegbar sein.

Bei einer Weiterbildung eines erfindungsgemäßen Ventilsitzes mit einem Montageabschnitt ist der wenigstens eine Umlenkkanal in der Axialrichtung im Bereich des Montageabschnitts angeordnet. Vorzugsweise dehnt sich der Umlenkkanal in der Axialrichtung vom Stirnende bis zum sowie gegebenenfalls bis in und optional bis über den Montageabschnitt hinaus aus. Alternativ dehnt sich der wenigstens eine Axialkanal, aus dem der wenigstens eine Umlenkkanal entspringt, sich Umlenkkanal in der Axialrichtung vom Stirnende bis zum sowie gegebenenfalls bis in und optional bis über den Montageabschnitt hinaus aus, wobei die Einlassöffnung des wenigstens einen Umlenkkanals im axialen Bereich des Montageabschnitts angeordnet ist. Insbesondere sind der Röhrenabschnitt und/oder die Mündungsöffnung des wenigstens einen Umlenkkanals im axialen Bereich des Montageabschnitts angeordnet. Vorzugsweise befinden sich sämtliche Mündungsöffnungen aller Umlenkkanäle (oder die Mündungsöffnung des genau einen Umlenkkanals) in der Axialrichtung unterhalb der Anschlagfläche. Die Anschlagfläche ist vorzugsweise nicht durch eine Mündungsöffnung durchdrungen.

Bei einem Ventilsitz gemäß einer weiteren Ausführung, die mit den vorigen kombinierbar ist, weist der Hülsenkörper mehrere Umlenkkanäle auf. Radial innere Mündungsöffnungen der mehreren Umlenkkanäle sind, insbesondere in Umfangsrichtung und/oder um eine Mittelachse des Hülsenkörpers betrachtet, an der Führungsfläche, vorzugsweise gleichmäßig, verteilt angeordnet. Die mehreren Umlenkkanäle und deren jeweilige Mündungsöffnung sind vorzugsweise in Umfangsrichtung versetzt zu einander angeordnet. Vorzugsweise kann die Führungsfläche wenigstens eine Reihe in Umfangsrichtung gleichmäßig versetzter Mündungsöffnungen aufweisen. Optional kann es bevorzugt sein, dass die Führungsfläche wenigstens eine Gruppe in der Axialrichtung gleichmäßig versetzter Mündungsöffnungen aufweist. Die Führungsfläche kann eine Reihe in der Umfangsrichtung gleichmäßig versetzter Gruppen aus in Axialrichtung versetzten Mündungsöffnungen aufweisen. Ein Ventilsitz kann eine Vielzahl von Umlenkkanälen aufweisen, deren Mündungsöffnungen in der Axialrichtung versetzt zu einander angeordnet sind. Die mehreren Umlenkkanäle des Ventilsitzes können vorzugsweise eine in einer jeweiligen Radialrichtung senkrecht zur Hubachse bzw. Axialrichtung ausgerichtete Orientierung aufweisen. Es kann bevorzugt sein, dass der hohlzylindrischen Hülsenkörper zwei oder mehr jeweils paarweise diametral überliegende Umlenkkanäle mit diametral gegenüberliegenden Mündungsöffnungen aufweist. Indem mehrere eine Führungsfläche verteilt angeordnet Umlenkkanäle vorgesehen sind, kann einer Wirbelbildung besonders effizient entgegengewirkt werden. Die Anzahl der an der Führungsfläche verteilt angeordneten Umlenkkanäle ist vorzugsweise wenigstens zehn, insbesondere wenigstens 50, vorzugsweise wenigstens 100. Durch Verwendung einer großen Anzahl an Umlenkkanälen, beispielsweise im Bereich 20-200, kann eine Bypassströmung mit großem Volumen zum Beeinflussen der Hauptströmungsrichtung bereitgestellt werden.

Bei einer bevorzugten Weiterbildung eines Ventilsitzes mit mehreren Mündungsöffnungen sind die Mündungsöffnungen, insbesondere alle, in einem Mündungsbereich angeordnet. Der Mündungsbereich erstreckt sich in der Axialrichtung über eine Bereichsbreite, wobei die Bereichsbreite vorzugsweise konstant ist. Die Bereichsbreite des Mündungsbereich kann gemäß einer Alternative unmittelbar am unteren axialen Stirnende des Hülsenkörpers beginnen. Alternativ kann die Bereichsbreite des Mündungsbereich bei einem Sockelabstand relativ zum unteren axialen Stirnende beginnen. Der Sockelabstand kann vorzugsweise konstant bemessen sein. In Kombination mit der oben genannten Ausführung mit wenigstens einem Axialkanal ist es bevorzugt, dass der Axialkanal den Hülsenkörper entlang des gesamten Sockelabstandes durchdringt und optional bis in den Mündungsbereich ragt. Es ist denkbar, dass die Menge an Mündungsöffungen in Relation zum Innenumfang (Öffnungsdichte) im Mündungsbereich in der Axialrichtung variiert, beispielsweise kann die Öffnungsdichte in einer oberen Hälfte, einem oberen Drittel, oder einem oberen Zehntel des Mündungsbereichs kleiner sein als im übrigen Teil des Mündungsbereichs.

Die Erfindung betrifft auch ein Hubventilglied für ein Hubventil einer prozesstechnischen Anlage, wie eine chemische Anlage, insbesondere eine petrochemische Anlage, ein Kraftwerk, einer Brauerei oder dergleichen.

Das Hubventilglied umfasst eine Schließfläche zum schließenden kooperieren mit einer Anschlagfläche eines Ventilsitzes, insbesondere eines Ventilsitzes wie oben beschrieben. Alternativ kann das erfindungsgemäße Hubventilglied kombinierbar sein mit einem konventionellen Ventilsitz. Vorzugsweise verjüngt sich die Schließfläche. Insbesondere verjüngt sich die Schließfläche des Hubventilglieds, vorzugsweise in Schließrichtung des Hubventils und/oder nach unten, insbesondere in Richtung zum axialen Ende hin (hier: nach unten). Vorzugsweise ist das Hubventilglied zumindest im Bereich der Anschlagfläche rotationssymmetrisch bezüglich einer Mittelpunktlinie, die vorzugsweise entsprechend der Axialrichtung orientiert ist. Ein Hubventilglied mit einer sich verjüngenden Schließfläche wird oftmals als Ventilkegel bezeichnet werden. Insbesondere ist die Schließfläche als Mantelfläche eines Kegelstumpfs ausgebildet. Die Anschlagfläche des Ventilsitzes und die Schließfläche des Ventilkegel sind vorzugsweise formkomplementär aufeinander abgestimmt. Die Schließfläche und die Anschlagfläche können vorzugsweise eine kegelstumpfförmige Gestalt haben oder anders gesagt als Mantelfläche eines Kegelstumpfs ausgebildet sein.

Das Hubventilglied umfasst einen in der Axialrichtung oberhalb der Schließfläche angeordneten kreisförmigen Deckelabschnitt. Die Schließfläche kann eine untere Umfangsrandkante des Deckelabschnitts bilden. Der Deckelabschnitt ist vorzugsweise scheibenförmig, insbesondere tellerförmig. Der Deckelabschnitt ist vorzugsweise prozessfluiddicht. Vorzugsweise ist der Deckelabschnitt frei von Öffnungen, wie Durchgangsbohrung, für das Prozessfluid. Es kann bevorzugt sein, dass der Deckelabschnitt, insbesondere mittig und/oder koaxial, mit einer Stellstange insbesondere integral verbunden ist. Vorzugsweise ist das Hubventilglied derart auf einen korrespondierenden Ventilsitz abgestimmt, dass die Durchgangskanäle in einem verschlossenen Zustand mithilfe des Deckelabschnitts, insbesondere gemeinsam mit dem Ventilsitz, abdichtend verschließbar ist.

Ferner umfasst das erfindungsgemäße Hubventilglied einen in der Axialrichtung unterhalb der Schließfläche angeordneten zylinderhülsenförmigen Wandabschnitt. Das Hubventilglied definiert einen Innenhohlraum, den die Innenseite des Wandabschnitts umgibt. Der Wandabschnitt weist eine Vielzahl von radialen Durchgangskanäle für das Prozessfluid auf. Vorzugsweise erstrecken sich die Durchgangskanäle erstrecken im Wesentlichen radial durch den zylinderhülsenförmigen Wandabschnitt. Die Durchgangskanäle können eine jeweilige radiale Ausrichtung aufweisen, insbesondere eine radial ausgerichtete innere Öffnung an der Innenseite des Wandabschnitts, eine radial ausgerichtete äußere Öffnung Außenseite des Wandabschnitts der Führungsfläche und/oder einen radial ausgerichteten Durchgangsabschnitt aufweisen. Die radiale Ausrichtung des jeweiligen Durchgangskanals ist im Allgemeinen quer zu der Axialrichtung orientiert, insbesondere ist die radiale Ausrichtung orthogonal zur Axialrichtung orientiert.

In einem teilweise oder vollständig geöffneten Zustand eines FTO-Hubventils kann Prozessfluid durch mehrere Durchgangskanäle aus dem Innenhohlraum des Hubventilglieds radial nach außen in Richtung eines Auslasskanals des Hubventils strömen. Vorzugsweise sind die inneren Öffnungen der Durchlasskanäle, insbesondere alle, in einem Durchlassbereich angeordnet. Der Durchlassbereich erstreckt sich in der Axialrichtung über eine Durchlasshöhe, wobei die Durchlasshöhe vorzugsweise konstant ist. Die Durchlasshöhe des Durchlassbereichs beginnt vorzugsweise unteren axialen Ende der Schließfläche, insbesondere dem schmalen Ende der sich verjüngenden Schließfläche. Es ist denkbar, dass die Menge an äußeren Öffnugnen in Relation zum Außenumfang (Öffnungsdichte) Durchlassbereich in der Axialrichtung variiert, beispielsweise kann die Öffnungsdichte in einer oberen Hälfte, einem oberen Drittel, oder einem oberen Zehntel des Durchlassbereichs kleiner sein als im übrigen Teil des Mündungsbereichs. In dem Durchlassbereich können die Durchlasskanäle in Umfangsrichtung zu einander versetzt sein. Das Hubventilglied umfasst vorzugsweise mehrere in Axialrichtung zu einander versetzte Durchlasskanäle, insbesondere mehrere Axialrichtung versetzte Reihen mit je mehreren Durchlasskanälen.

Der zylinderhülsenförmige Wandabschnitt des Hubventilglieds umfasst außerdem einen Führungsabschnitt zum Abstützen des Hubventilglieds an dem Ventilsitz in einer zumindest teilweise geöffneten Stellung des Hubventilglieds. Vorzugsweise ist das Hubventilglied derart auf den Ventilsitz abgestimmt, dass der Führungsabschnitt das Hubventilglied in einem Axialbereich von wenigstens 0 % bis nicht mehr als 10 % Öffnung, insbesondere wenigstens 0 % bis nicht mehr als 25 % Öffnung, vorzugsweise 0 % bis nicht mehr als 50 % Öffnung, besonders bevorzugt 0 % bis 100 %-Öffnung, abstützt. Der Führungsabschnitt erstreckt sich in der Axialrichtung ausgehend von dem Deckelabschnitt vorzugsweise weiter als der Durchlassabschnitt. Insbesondere umfasst der zylinderhülsenförmige Wandabschnitt einen oberen Durchlassabschnitt und einen unteren Kragenabschnitt, der den Führungsabschnitt realisiert, wobei vorzugsweise der Kragenabschnitt vollständig frei oder im Wesentlichen frei von Durchgangsöffnungen ist. Der Führungsabschnitt ist vorzugsweise formkomplementär abgestimmt auf eine radial innenseitige Führungsfläche zur Kooperation mit dem Hubventilglied vorgesehenen Ventilsitzes. Der Führungsabschnitt und die Führungsfläche können beispielsweise gemäß einer Spielpassung oder einer Gleitpassung aufeinander abgestimmt sein.

Erfindungsgemäß ist vorgesehen, dass das Hubventilglied ein Umlenkprofil für innerhalb des Innenhohlraums angeordnetes Prozessfluid umfasst und/oder ein Umlenkprofil, um eine Hauptströmungsrichtung des Prozessfluids im Bereich der Durchgangsöffnung zu beeinflussen. Das Umlenkprofil ist vorzugsweise an der Innenseite des Wandabschnitts ausgebildet, um Prozessfluid in den radialen Innenhohlraum des Hubventilglieds hinein zu führen. Alternativ oder zusätzlich ist das Umlenkprofil dazu ausgelegt und eingerichtet, Prozessfluid zum oder in den radialen Innenhohlraum zu führen, um eine Hauptströmungsrichtung des Prozessfluids im Bereich der Durchgangsöffnung zu beeinflussen. Insbesondere ist durch das Umlenkprofil in einem teilweise geöffneten Zustand und/oder in einem vollständig geöffneten Zustand eine Umlenkung von Prozessfluide im Innenhohlraum und/oder eine Beeinflussung der Hauptströmungsrichtung gewährleistet. Durch das Umlenkprofil kann dem Prozessfluid im Innenhohlraum des Ventilgliedes eine Strömungskomponente aufgeprägt werden, die das dort fließende Prozessfluid umlenkt.

Gemäß einer bevorzugten Ausführung eines Hubventilglieds umfasst das Umlenkprofil wenigstens einen an der Innenseite angeordneten radialen Rücksprung und/oder wenigstens einen an der Innenseite angeordneten radialen Vorsprung. Vorzugweise ist die Erstreckung des wenigstens einen Vorsprung und/oder Rücksprung in der Axialrichtung gleich groß und/oder größer als dessen radiale Höhe. Der wenigstens eine radiale Vorsprugn und/oder Rücksprung kann an dem Wandabschnitt angeformt, mit dem Wandabschnitt durch ein additives Herstellungsverfahren gemeinsam gebildet, durch ein subtraktives, beispielsweise spanabhebendes Verfahren eingebracht oder durch eine Umformung des Wandabschnitts gebildet werden. Die radiale Höhe des wenigstens einen Vorsprungs und/oder Rücksprungs in Relation zur lichten Weite, insbesondere dem Innendurchmesser, des Innenhohlraums liegt vorzugsweise im Bereich 1% Prozent bis 20 %, insbesondere 2 % bis 10 %, vorzugsweise bei etwa 5 %. In Relation zu einer vorzugsweise konstanten Wandstärke des Wandabschnitts kann der wenigstens eine Rücksprung eine radiale Höhe von 10 % bis 75 % der Wandstärke, vorzugsweise 30 % bis 60 % der Wandstärke, besonders bevorzugt etwa 50 % der Wandstärke, aufweisen. In Relation zu einer vorzugsweise konstanten Wandstärke des Wandabschnitts kann der wenigstens eine Vorsprung eine radiale Höhe von wenigstens 25% der Wandstärke, insbesondere wenigstens bis 50 %, vorzugsweise wenigstens 75 % der Wandstärke, besonders bevorzugt wenigstens 150 % der Wandstärke, aufweisen. Es hat sich gezeigt, dass derartige Vorsprünge und/oder Rücksprünge dazu geeignet sind, der Hauptströmung im Bereich des Innenhohlraums durch eine hinreichend große Menge Prozessfluids Querströmung-Vektor Komponente zu beeinflussen, um einer Wirbelbildung im Innenhohlraum wirksam entgegenzuwirken.

Bei einer Weiterbildung umfasst das Hubventilglied mehrere Vorsprünge und/oder Rücksprünge, die an der Innenseite des zylinderhülsenförmigen Wandabschnitts, insbesondere in Umfangsrichtung und/oder um eine Mittelachse des Hülsenkörpers betrachtet gleichmäßig verteilt, angeordnet sind. Vorzugsweise sind an der Innenseite mehrere radiale Rücksprünge und radiale Vorsprünge vorgesehen, die in Umfangsrichtung wechselweise angeordnet sind. Vorzugweise ist die Erstreckung der Rücksprünge und/oder der Vorsprünge in der Umfangsrichtung gleich groß und/oder größer als die radiale Höhe. Insbesondere umfasst des Hubventilglied wenigstens zwei, vorzugsweise wenigstens drei, besonders bevorzugt wenigstens fünf und schrecklich oder nicht mehr als 50, vorzugsweise nicht mehr als 20, besonders bevorzugt nicht mehr als 12, an der Innenseite angeordnete radiale Rücksprünge. Alternativ oder zusätzlich umfasst des Hubventilglied wenigstens zwei, vorzugsweise wenigstens drei, besonders bevorzugt wenigstens fünf und schrecklich oder nicht mehr als 50, vorzugsweise nicht mehr als 20, besonders bevorzugt nicht mehr als 12, an der Innenseite angeordnete radiale Vorsprünge. Vorzugsweise ist die Anzahl radiale Rücksprünge und radiale Vorsprünge an der Innenseite gleich. Die Vorsprünge und/oder Rücksprünge können spiegelsymmetrisch an der Innenseite des Wandabschnitts angeordnet sein. Gemäß einer bevorzugten Ausführung kann das Hubventilglied acht an der Innenseite ausgebildete radiale Rücksprünge aufweisen, die eine radiale Höhe von je etwa 5 % des Innendurchmessers des Innenhohlraums haben. Es hat sich gezeigt, dass bei einer derartigen Ausgestaltung

Bei einer Weiterbildung eines erfindungsgemäßen Hubventils mit wenigstens einem radialen Vor- und/oder Rücksprung erstreckt sich der wenigstens eine radiale Vorsprung und/oder Rücksprung am unteren axialen Ende beginnend in der Axialrichtung, insbesondere geradlinig, in den Innenhohlraum. Insbesondere erstreckt sich der wenigstens eine radiale Vorsprung und/oder Rücksprung bis hin zu den Durchgangskanälen respektive dem Durchlassbereich, vorzugsweise teilweise oder vollständig in dem Führungsabschnitt. Die axiale Höhe des wenigstens einen radialen Vor- und/oder Rücksprung kann in einer Distanz in der Axialrichtung vor dem Durchlassbereich bzw. den Durchgangskanälen enden. Es kann bevorzugt sein, dass der wenigstens eine Rücksprung in dem Wandabschnitt beginnend an dessen unterem Ende als Axialnut eingebracht, beispielsweise eingefräst ist. Beginnend vom unteren Ende des hülsenförmigen Wandabschnitts lässt sich zum einen das Umlenkprofil gut herstellen. Ferner hat sich gezeigt, dass einem unteren Ende des hülsenförmigen Wandabschnitts beginnen des Umlenkprofil eine besonders ausgeprägte Umlenkwirkung zu entfalten vermag.

Bei einer bevorzugten Ausführung eines Hubventilglieds weist der Wandabschnitt einen Steuerabschnitt auf, der auch als Durchlassabschnitt bezeichnet wird, in dem die radialen Durchgangskanäle, insbesondere alle, angeordnet sind. Der Steuerabschnitt ist in der Axialrichtung, insbesondere vollständig, zwischen dem Führungsabschnitt und dem Deckelabschnitt angeordnet. Die axiale Höhe des Wandabschnitts kann vorzugsweise unterteilt werden in wenigstens 10 % Durchlassabschnittshöhe (Steuerabschnittshöhe), insbesondere wenigstens 25 % Durchlassabschnittshöhe, vorzugsweise wenigstens 35 % Durchlassabschnittshöhe, besonders bevorzugt wenigstens 45 % Durchlassabschnittshöhe, und/oder nicht mehr als 75 % Durchlassabschnittshöhe, insbesondere nicht mehr als 66 % Durchlassabschnittshöhe, vorzugsweise nicht mehr als 50 % Durchlassabschnittshöhe, und im Übrigen Führungsabschnittshöhe beziehungsweise Kragenabschnittshöhe. Die axiale Höhe des Wandabschnitts erstreckt sich von der Unterkante der Schließfläche zum unteren Ende des zylinderhülsenförmigen Wandabschnitts.

Gemäß bevorzugten Weiterbildung eines Hubventilglieds mit einem Führungsabschnitt und einem Steuerabschnitt ist das Umlenkprofil zumindest teilweise, insbesondere überwiegend oder vollständig, im Führungsabschnitt angeordnet. Die axiale Höhe des wenigstens einen radialen Vor- und/oder Rücksprung beträgt optional wenigstens 30 %, insbesondere wenigstens 50 %, vorzugweise wenigstens 75 %, und/oder nicht mehr als 100 %, insbesondere nicht mehr als 90 %, vorzugsweise nicht mehr als 80 %, der axialen Höhe des Führungsabschnitts. Vorzugsweise ist der Steuerabschnitt frei von dem Umlenkprofil. Der Führungsabschnitt ist vorzugsweise frei von Durchgangskanälen. Zwischen dem unteren Ende des Steuerabschnitts frei von Durchgangskanälen und dem oberen Ende des wenigstens einen Umlenkprofils frei von dem Umlenkprofil ist kann vorzugsweise eine axiale Distanz ausgebildet sein.

Die Erfindung betrifft auch ein Hubventil für eine prozesstechnische Anlage, wie eine chemische Anlage, insbesondere eine petrochemische Anlage, ein Kraftwerk, einer Brauerei oder dergleichen. Das Hubventil umfasst ein Ventilgehäuse, das einen Einlasskanal, einen Auslasskanal, einen Brückenabschnitt mit einer Durchgangsöffnung und einem Halsbereich umfasst. Das erfindungsgemäße Hubventil hat einen zumindest teilweise in dem Brückenabschnitt, insbesondere in der Durchgangsöffnung des Brückenabschnitts, angeordneten Ventilsitz, insbesondere wie oben beschrieben ausgeführt sein kann. Ferner umfasst das Hubventil ein mit dem Ventilsitz kooperierendes Hubventilglied, das insbesondere wie oben beschrieben ausgeführt sein kann. Das Hubventilglied umfasst einen zylindrischen Innenhohlraum und ist in Axialrichtung relativ zu dem Ventilsitz beweglich. Der Ventilsitz ist vorzugsweise derart am Brückenabschnitt montiert, dass die Durchgangsöffnung mit einem zum Ventilsitz korrespondierenden Hubventilglied verschließbar ist. Insbesondere umfasst der Ventilsitz einen Hülsenkörper und eine Anschlagfläche zum verschließenden kooperieren mit einem Hubventilglied dem Hubventils. Das erste axiale Ende des Ventilsitzes kann an einer Oberseite des Brückenabschnitts angeordnet sein, insbesondere flanschartig darauf aufliegen. Vorzugsweise erstreckt sich der Ventilsitz in der Axialrichtung aus dem Bereich des Einlasskanal durch die Durchgangsöffnung bis in den Bereich des Auslasskanals. Der hohlzylindrischen Hülsenkörper des Ventilsitzes erstreckt sich in der Axialrichtung vollständig durch die Durchgangsöffnung und dehnt sich darüber hinaus insbesondere beidseitig aus. Vorzugsweise steht das erste axiale Ende des Ventilsitzes mit der daran angeordneten Anschlagfläche in Richtung auf das Hubventilglied und/oder den Halsbereichs zu weisend aus der Durchgangsöffnung hervor. Der Ventilsitz kann eine sich von der Anschlagfläche in Axialrichtung unterhalb erstreckende, radial innenseitige Führungsfläche zum Abstützen des Hubventilglieds an dem Ventilsitz in einer zumindest teilweise geöffneten Stellung des Hubventilglieds umfassen.

Das Hubventilglied umfasst einen in der Axialrichtung oberhalb der Schließfläche angeordneten kreisförmigen Deckelabschnitt. Die Schließfläche kann eine untere Umfangsrandkante des Deckelabschnitts bilden. Der Deckelabschnitt ist vorzugsweise scheibenförmig, insbesondere tellerförmig. Der Deckelabschnitt ist vorzugsweise prozessfluiddicht. Vorzugsweise ist der Deckelabschnitt frei von Öffnungen, wie Durchgangsbohrung, für das Prozessfluid. Es kann bevorzugt sein, dass der Deckelabschnitt, insbesondere mittig und/oder koaxial, mit einer Stellstange insbesondere integral verbunden ist. Das Hubventilglied umfasst vorzugsweise einen unter in Axialrichtung unterhalb der Schließfläche angeordneten zylinderhülsenförmigen Wandabschnitt, dessen Innenseite den Innenhohlraum umgibt. In der Axialrichtung unterhalb der Schließfläche kann das Hubventilglied einen Wandabschnitt aufweisen, der radial außenseitig zumindest Abschnittsweise mit einem Führungsabschnitt ausgebildet ist. Vorzugsweise sind der Führungsabschnitt und die Führungsfläche auf einander abgestimmt, insbesondere formkomplementär, beispielsweise gemäß einer Spiel- oder Gleitpassung, sodass sich das Hubventilglied in radialer Richtung an dem Ventilsitz abstützt.

Erfindungsgemäß ist vorgesehen, dass das Hubventil eine Umlenkung, wie ein Umlenkprofil und/oder einen Umlenkkanal, umfasst. Die Umlenkung des Hubventils kann insbesondere als Umlenkprofil an einer Innenseite des Ventilsitzes realisiert sein. Alternativ oder zusätzlich kann die Umlenkung des Hubventils als wenigstens einen Umlenkkanal realisiert sein, der an oder in dem Ventilsitz gebildet ist. Insbesondere durchdringt der wenigstens eine Umlenkkanal einen Wandabschnitt, vorzugsweise im Bereich des Führungsabschnitts, des Hubventilgliedes in Radialrichtung. Die Umlenkung des Hubventils kann ausgelegt und eingerichtet sein zum Umlenken von innerhalb des Innenhohlraums angeordnetem Prozessfluids. Alternativ oder zusätzlich umfasst das Hubventil eine Umlenkung zum Beeinflussen eine Hauptströmungsrichtung des Prozessfluids im Bereich der Durchgangsöffnung.

Bevorzugte Ausführungen der Erfindung werden in den abhängigen Ansprüchen beschrieben. Weitere Eigenschaften, Vorteile und Merkmale der Erfindung werden durch die folgende Beschreibung von bevorzugten Ausführungen der Erfindung anhand der beiliegenden Zeichnungen deutlich, in denen zeigen:
- Fig. 1: eine Querschnittsansicht einer ersten Ausführung eines erfindungsgemäßen Hubventils, dessen Ventilsitz Umlenkkanäle aufweist;
- Fig. 2: eine perspektivische Darstellung einer anderen erfindungsgemäßen Ausführung eines Ventilsitzes; und
- Fig. 3: eine perspektivische Darstellung einer weiteren erfindungsgemäßen Ausführung eines Ventilsitzes; und
- Fig. 4: eine Querschnittsansicht einer zweiten Ausführung eines erfindungsgemäßen Hubventils, dessen Hubventilglied ein Umlenkprofil aufweist;

In der nachfolgenden Beschreibung bevorzugter Ausführungen anhand der Figuren werden zur Vereinfachung der Lesbarkeit dieselben oder ähnliche Komponenten mit denselben oder ähnlichen Bezugszeichen versehen.

Ein erfindungsgemäßer Ventilsitz wird im Allgemeinen mit Bezugszeichen 1 (1a, 1b, 1c) bezeichnet. bezeichnet. Ein mit dem erfindungsgemäßen Ventilsitz kombinierbares konventionelles Hubventilglied wird mit dem Bezugszeichen 6 bezeichnet. Ein erfindungsgemäßes Hubventilglied wird im Allgemeinen mit dem Bezugszeichen 5 bezeichnen und ein damit kombinierbarer konventioneller Ventilsitz mit dem Bezugszeichen 2. Der Fachmann versteht, dass ein erfindungsgemäßes Hubventilglied 5 mit einem erfindungsgemäßen Ventilglied kombinierbar ist, wobei in manchen Anwendungsszenarien Synergie-Effekte nutzbar sind. Ein erfindungsgemäßes Hubventil mit einer Umlenkung ist im Allgemeinen mit dem Bezugszeichen 100 bezeichnet.

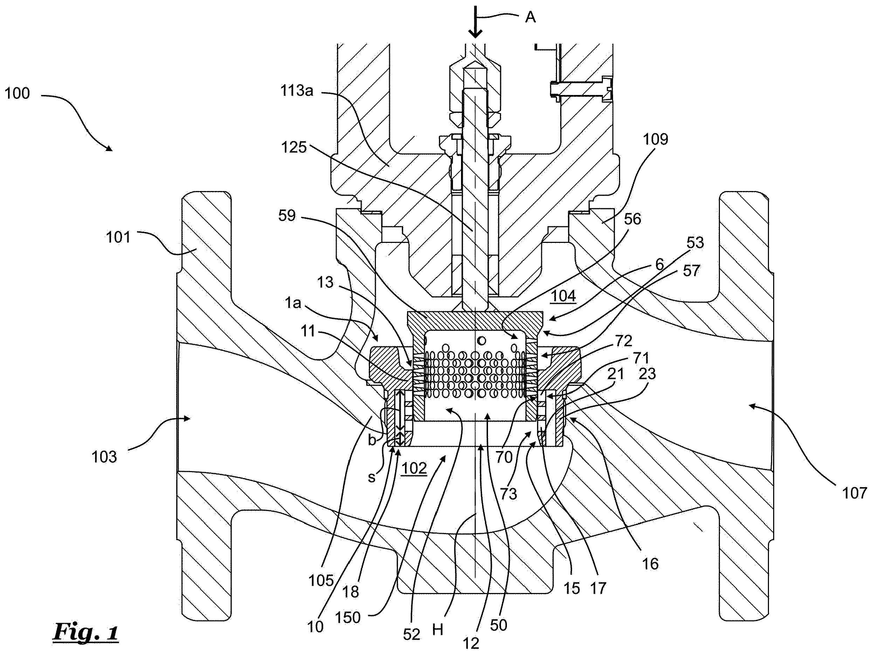

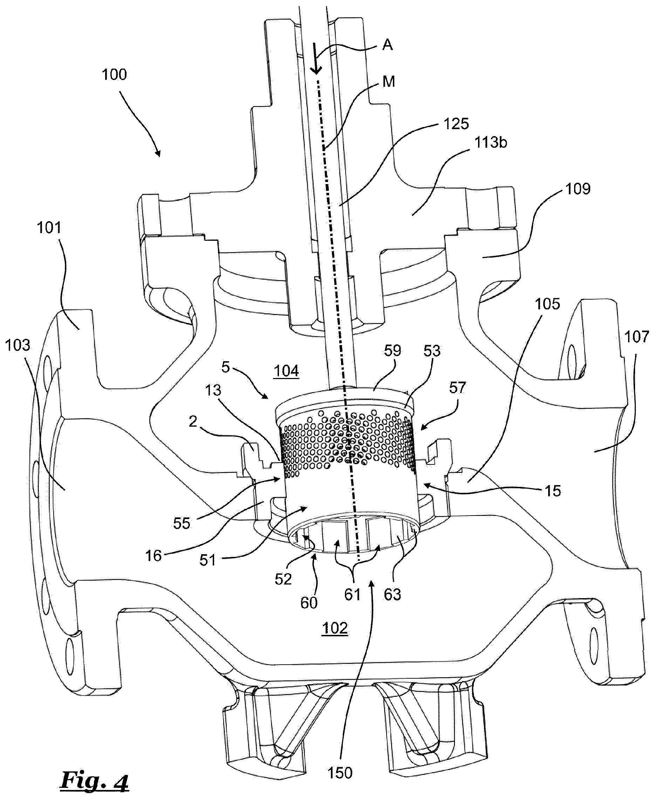

Das grundsätzliche Konzept eines erfindungsgemäßen Hubventils 100 mit einer Umlenkung wird nachfolgend anhand der in Figur 1 abgebildeten Ausführung erläutert, die ein konventionelles Hubventilglied 6 aufweist und bei welcher der Ventilsitz 1a mit einer Vielzahl an Umlenkkanälen 17 ausgestattet ist. Figur 1 zeigt eine erste Ausführung eines erfindungsgemäßen Hubventils 100 mit einem Ventilsitz 1a. Sofern nicht anders angegeben, gelten die nachfolgenden Ausführungen in Bezug auf das Hubventil 100, welches in der Figur 4 abgebildet ist. Das in Figur 4 abgebildete Hubventil 100 unterscheidet sich von dem in Figur 1 abgebildeten im Wesentlichen nur durch das erfindungsgemäße Hubventilglied 5 mit Umlenkprofil und den konventionellen Ventilsitz 2.

Das Hubventil 100 umfasst in der in Figur 1 abgebildeten Ausführung ein Ventilgehäuse 101 und eine daran befestigte Abdeckung 113a. Unmittelbar zwischen der Abdeckung 113a und dem Ventilgehäuse 101 kann ein Dichtring oder dergleichen vorgesehen sein, um eine Leckage aus dem Innenraum des Hubventils 100 entlang der Kontaktfläche zwischen Abdeckung 113a und Ventilgehäuse 101 zu verhindern. Innerhalb des Ventilgehäuses 101 ist ein Hubventilglied 6 translationsbeweglich gehalten. In dem Ventilgehäuse 101 ist der Ventilsitz 1a ortsfest montiert.

Das Ventilgehäuse 101 umfasst einen Einlasskanal 103, einen Auslasskanal 107, einen Brückenabschnitt 105 mit einer Durchgangsöffnung 150 und einen Halsbereich 109. In der nachfolgenden Beschreibung wird das Hubventil 100 zur Vereinfachung des Verständnisses in einer betriebsgemäßen FTO-Konfiguration beschrieben. Der Fachmann versteht, dass alternativ eine FTC-Konfiguration realisiert sein kann. In der FTO-Konfiguration des Hubventils 100 kann in dessen abgebildeten geöffneten Zustand das Prozessfluid von dem Einlasskanal 103 durch den Brückenabschnitt 105 zum Auslasskanal 107 strömen. In der in Figur 1 abgebildeten teilweise geöffneten Stellung sind mehrere einer Vielzahl von Durchgangskanälen 57 des Hubventilglieds 6 freigegeben, durch die das Prozessfluid strömen kann.

In dem Brückenabschnitt 105 des Ventilgehäuses 101 ist eine Durchgangsöffnung 150 vorgesehen, in der der Ventilsitz 1a eingesetzt ist. Im Kontaktbereich des Ventilgehäuses 101 und des Ventilsitzes 1a in oder an der Durchgangsöffnung 150 kann ein nicht näher dargestelltes Dichtmittel vorgesehen sein, um in dem geschlossenen Zustand des Hubventils 100 eine Prozessfluid-Leckageströmung entlang des Kontaktbereiches zu verhindern. In dem geöffneten Zustand des Hubventils 100 kann das Prozessfluid durch die lichte Weite des Ventilsitzes 1a, die durch den Innendurchmesser des Ventilsitzes 1a definiert ist, durch den Innenhohlraum 50 des Hubventilglieds 6 und sodann durch dessen radiale Durchgangskanäle 57 strömen.

Das Hubventilglied 6 und der Ventilsitz 1a können abdichtend schließend miteinander kooperieren. In einer nicht im Detail dargestellten Schließstellung des Hubventils 100 kooperiert das Hubventilglied 6 abdichtend mit dem Ventilsitz 1a, wodurch der die Durchgangsöffnung 150 verschlossen ist und kein Prozessfluid aus dem Innenhohlraum 57 durch die Durchgangskanäle 57 von dem Einlasskanal 103 zum Auslasskanal 107 fließen kann, sodass eine Prozessfluidströmung durch das Hubventil 100 unterbunden ist.

Das Hubventilglied 6 ist verbunden mit einer Stellstange 125]. Das Hubventilglied 6 realisiert einen fest mit der Stellstange 125 verbundenen Ventilkegel, an dem die Schließfläche 53 ausgebildet ist. Mittels der Stellstange 125 kann das Hubventilglied 6 zur Betätigung mit einem Stellaktor verbunden sein, der das Hubventilglied 6 translatorisch festhalten und/oder bewegen kann. Die translatorische Beweglichkeit des Hubventilglieds 6 relativ zum Ventilsitz 1a ist vorzugsweise durch die Führungsfläche 15 des Ventilsitzes 1a und den damit in gleitendem Berührkontakt stehenden Führungsabschnitt 51 des Hubventilglieds 6 festgelegt.

Das Hubventilglied 6 ist vorzugsweise in der Abdeckung 113a linearbeweglich gelagert, sodass sich das Hubventilglied 6 entlang einer Hubachse translatorisch bewegen kann, die vorzugsweise zu einer Mittelachse M des Hubventilglieds korrespondiert. Die Abdeckung 113a kann, wie in Figur 1 dargestellt, als sogenannte Laterne gebildet sein. Zur weitergehenden Festlegung der translatorischen Beweglichkeit des Hubventilglieds 6 kann die Abdeckung 113a optional ein Lineargleitlager oder dergleichen zur Führung der Stellstange 125 umfassen. Unmittelbar zwischen der Stellstange 125 und der Abdeckung 113a kann eine Dichtpackung 114 oder dergleichen vorgesehen sein, um eine Leckage aus dem Innenraum des Hubventils 100 entlang der Stellstange zu verhindern. In der nicht näher abgebildeten Schließstellung befindet sich das Hubventilglied 6 in Eingriff mit dem Ventilsitz 1a. In der Schließstellung steht eine Schließfläche 53 des Hubventilglieds 6 in abdichtenden Berührkontakt mit einer korrespondierenden Anschlagfläche 13 des Ventilsitzes 1a. Die Anschlagfläche 13 des Ventilsitzes 1a ist als Mantelfläche eines Kegelstumpfs ausgebildet, oder kurz: kegelstumpfförmig. Vorzugsweise ist auch die dazu korrespondierende Schließfläche 53 des Hubventilglieds oder Ventilkegels als Mantelfläche eines Kegelstumpfs (kegelstumpfförmig) gebildet.

In dem geschlossenen Zustand des Hubventils 100 ist dessen Innenraum durch das Hubventilglied 6 und den Ventilsitz 1a unterteilt in einen unteren Arbeitsraum 102, in den der Einlasskanal 103 mündet, und einen oberen Arbeitsraum 104, in den der Auslasskanal 107 mündet. Der Ventilsitz 1a wird nachfolgend im Detail beschreiben. Zum Freigegeben einer Prozessfluidströmung kann der Ventilkegel in dem oberen Arbeitsraum 104 fort von dem Ventilsitz 1a bewegt werden, beispielsweise bis zu der in Figur 1 gezeigten geöffneten Stellung des Hubventils 100, in die Anschlagfläche 13 die Schließfläche 53 freigibt, sodass Prozessfluid durch die Durchgangkanäle 57 strömen kann. In der in Figur 1 abgebildeten Öffnungsstellung des Hubventils 100 befindet sich das Hubventilglied 6 und in dem ersten Arbeitsraum 104. In der Öffnungsstellung verbleiben die Führungsfläche 15 und der Führungsabschnitt 51 bevorzugt in Kontakt mit einander. Zu den Durchgangskanälen 57 des Hubventilglieds 6 fließt das Prozessfluid vom Einlasskanal 103 fließt das Prozessfluid durch den im Wesentlichen zylindrischen Innenraum 12 des Hülsenkörpers 11 des Ventilsitzes 1a und den Innenhohlraum 50 und den zylinderhülsenförmigen Wandabschnitt 55 des Ventilglieds 6. In den Innenraum 12 münden die Umlenkkanäle des Ventilsitzes 1a.

Der Ventilsitz 1a umfasst einen hohlzylindrischen Hülsenkörper 11. Der Hülsenkörper definiert eine Axialrichtung A, die zu seiner Mittelachse vorzugsweise mit seiner Zylinderachse korrespondiert. Die Axialrichtung A des Hülsenkörpers 11 entspricht der translatorischen Bewegungsrichtung des darin geführten Hubventilglieds 6. Der Hülsenkörper 11 umgibt einen Innenraum 12 vollumfänglich. Der Hülsenkörper 11 hat an seinem radialen Außenumfang einen Montageabschnitt 16 zur Befestigung des Ventilsitzes 1a am Brückenabschnitt 105 des Ventilgehäuses 101. Am in Axialrichtung A oberen (ersten) Ende des Hülsenkörpers 11 ist die Anschlagfläche 15 angeordnet, die in einen abdichtenden Berührkontakt mit der Schließfläche 53 des Hubventilglieds 6 gebracht werden kann. Das in Axialrichtung unteren (zweiten) Ende oder Stirnende 10 des Ventilsitzes 1a ragt im dargestellten betriebsgemäßen Einbauzustand in den ersten Arbeitsraum 102 hinein. Das Stirnende 10 begrenzt die untere Randkante des im Wesentlichen zylindrischen Innenraums 12 des Ventilsitzes 1a. In dem Innenraum 12 ist das Hubventilglied 6 translationsbeweglich geführt. Im betriebsgemäßen Einbauzustand ist das Stirnende 10 vorzugsweise unterhalb des Brückenabschnitts 105 angeordnet.

Am Stirnende 12 ist ein Axialkanal 18 ausgebildet, durch den Prozessfluid, außerhalb des Innenraums 12, in der Axialrichtung A fließen kann. Der abgebildete Axialkanal 18 ist als axiale Ringnut realisiert, deren Nutgrund sich in Bezug auf die der Axialrichtung A betrachtet nahe des Anschlagfläche 13 befindet. Der Axialkanal 18 kann sich, wie abgebildet, innerhalb des Hülsenkörpers 11 bis zum und/oder über den Montageabschnitt 16 hinaus erstrecken. Der Axialkanal 18 ist radial innenseitig von einer Innenwand 21 und radial außenseitig von einer Außenwand 23 eingerahmt. Der Axialkanal 18 erstreckt sich vollumfänglich um den Innenraum 12. Der Hülsenkörper 11 bildet die Innenwand 21 und die Außenwand 23. An der Außenumfangsfläche der Außenwand 23 ist der Montageabschnitt gebildet. Die Innenumfangsfläche der Innenwand 21 bildet die Führungsfläche 15.

Der Hülsenkörper 11 weist eine Vielzahl in Bezug die Axialrichtung A radial ausgerichteter Umlenkkanäle 17 auf. Die Umlenkkanäle 17 sind in der Axialrichtung A in drei übereinander angeordneten Reihen angeordnet. Die Umlenkkanäle 17 erstrecken sich in der Radialrichtung vom Innenraum 12 durch die Innenwand 21 zum Axialkanal 18. Bei der hier abgebildeten Ausführung ist derselbe ringnutförmiger Axialkanal 18 mit sämtlichen Umlenkkanäle 18 verbunden. Radial innenseitig enden die Umlenkkanäle 17 an Mündungsöffnungen 70 in der Führungsfläche 15. Am Übergang zu dem Axialkanal 18 weist jeder Umlenkkanal 17 eine Einlassöffnung 71 auf. Der Umlenkkanal 17 erstreckt sich von seiner jeweiligen der Einlassöffnung 71 entlang eines jeweiligen Röhrenabschnitts 72 zur jeweiligen Mündungsöffnung 70. An der Führungsfläche 15 definieren die Mündungsöffnungen 70 in der Axialrichtung A einen Mündungsbereich 73. Der Mündungsbereich 73 hat in der Axialrichtung A eine Mündungsbereichsbreite b, die sich von der Unterkante eines unteren Umlenkkanals zur Oberkante eines oberen Umlenkkanals erstreckt. Zwischen dem Stirnende 10 des Hülsenkörpers 11 und dem Mündungsbereich 73 kann, wie abgebildet, eine Sockelbreite s angeordnet sein. Die Umlenkkanäle 17 münden in Axialrichtung A unterhalb der Anschlagfläche 13 in den Innenraum 12 des Ventilsitzes 1a. Durch die Umlenkkanäle 17 kann Prozessfluid mit überwiegenden bzw. ausschließlich Querströmungs-Vektorkomponente in den Bereich des Innenhohlraums 50 eingeführt werden, um die dort vorherrschende Hauptströmungsrichtung des Prozessfluides, welches sich von der Einlassöffnung 103 zur Auslassöffnung 105 bewegt, zu beeinflussen.

Bei Ventilen aus dem Stand der Technik, die beispielsweise einen konventionellen Ventilsitz 2, wie in Figur 4 abgebildet und ein konventionelles Hubventilglieds 6, wie in Figur 1 dargestellt, aufweisen, hat sich herausgestellt, dass im Bereich des vom Innenraum 12 des Ventilsitzes 2 in den Innenhohlraum 50 des Ventilgliedes 6 zylindrischen Durchströmungsbereichs eine Wirbelbildung auftreten kann. Infolge einer Wirbelbildung in diesem Durchströmungsbereich kann die dort vorherrschende Hauptströmung des Prozessfluides maßgeblich durch ihre Wirbelströmungs-Vektorkomponente geprägt sein. In dem zylindrischen Durchströmungsbereich, wo keine radialen Durchgangskanäle vorgesehen sind und der vornähme dazu bereitgestellt sein kann, um das Hubventilglied 6 an dem Ventilsitz 2 zu führen, geht erfahrungsgemäß mit einem erhöhten Risiko zur Wirbelbildung rings um die Stellstange Achse bzw. Mittelachse einher. Dabei kann infolge der Bildung von Strudeln oder Wirbeln im Bereich des Zug Ventilgliedes 6 ein unerwünschter Druckabfall wie auch ein erheblicher Strömungswiderstand auftreten. Es hat sich gezeigt, dass bei solchen Hubventilgliedern 6, die auch als Lochkegel bezeichnet sein können, bei bestimmten Öffnungsstellung eine Strömungsablösung an der Innenseite 52 auftreten kann. Solche Wirbel können dafür sorgen, dass erhebliche Druckverluste entstehen und die Durchströmung des Hubventils verschlechtert wird. Es wird vermutet, dass die Verschlechterung der Durchströmung damit zusammenhängt, dass die Wirbelströmungen im Durchströmungsbereich hohe Geschwindigkeitsanteile in Umfangsrichtung aufweisen, also orthogonal zu der Orientierung der Durchgangskanäle 57. Im Vergleich zu theoretisch erwarteten KV-Werten konnten bei konventionellen Ventilen um ca. 30 % verringerte KV-Werte im Vergleich zu theoretisch erwarteten Referenz-KV-Werten gemessen werden.

Die Umlenkkanäle 17 in dem erfindungsgemäßen Ventilsitz 1a (wie auch die Umlenkkanäle 17 der anderen Ausgestaltungen erfindungsgemäßer Ventilsitze 1b, 1c) können einer Wirbelbildung in dem Durchströmungsbereich entgegenwirken. Indem die Prozessfluidströmung teilweise durch die Umlenkkanäle 17 zum Innenhohlraum 50 geleitet wird, werden dort Querströmungen bereitgestellt, welche dazu geeignet sein können, um temporäre Wirbel zu brechen, und/oder dazu, auftretende Wirbel durch radiales einwirken zu ersticken, und Prozessfluid in quer zur Axialrichtung A zu den Durchgangskanälen 17 des Hubventilgliedes 5 zu fördern.

Die lichte Weite bzw. der Innendurchmesser des Innenraums 12 ist signifikant größer als die Stärke der Innenwand 21 und die lichte Weite bzw. der Durchmesser der Durchgangskanäle 17. Die Stärke der Innenwand 21 und die dazu korrespondierende Länge des Röhrenabschnitts 72 der Umlenkkanäle 17 kann in Relation zu deren Durchmesser im Wesentlichen gleich groß dimensioniert sein. Die lichte Weite des Innenraums 12 kann beispielsweise etwa eine Größenordnung, also beispielsweise zehnmal, größer sein als der Innendurchmesser eines Durchgangskanals 17.

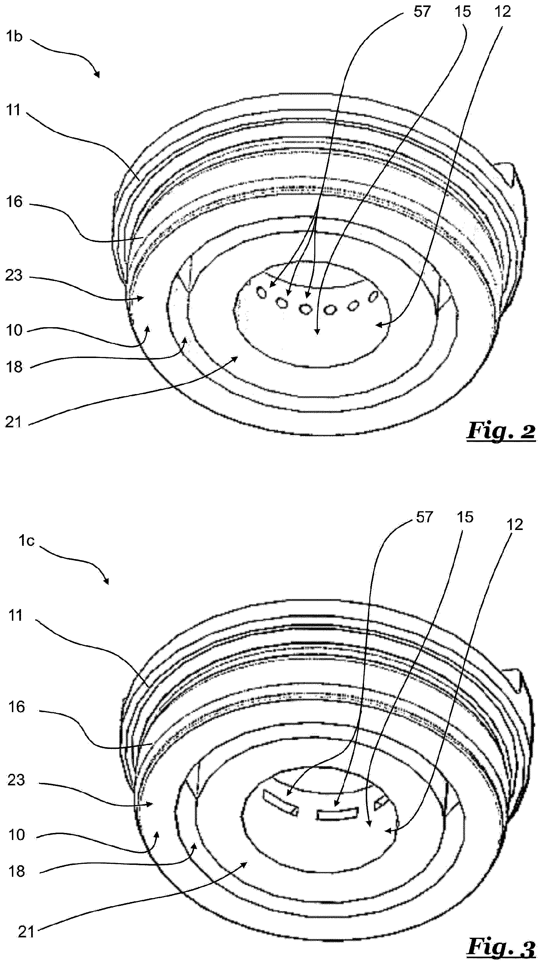

Figur 2 zeigt eine andere Ausführung eines erfindungsgemäßen Ventilsitzes 1b. Von dem zuvor beschriebenen Ventilsitz 1a unterscheidet sich der Ventilsitz 1b im Wesentlichen nur dadurch, dass die Wandstärke der Innenwand 21 größer ist als der Durchmesser der Umlenkkanäle 17 und dadurch dass in der Axialrichtung A eine einzige Reihe Umlenkkanäle auf der gleichen axialen Höhe angeordnet sind. Die Anzahl der Umlenkkanäle 17 liegt zwischen 10 und 20. Die Umlenkkanäle 17 sind durch in der Radialrichtung orientierte Bohrungen gebildet, die sich vom zylindrischen Innenraums 12 des Ventilsitzes 1b zu dem Axialkanal 18 erstrecken. Bei dieser Ausführung entspricht die Mündungsbereichsbereite dem Durchmesser der Mündungsöffnungen 70 der Umlenkkanäle 17.

Figur 3 zeigt eine weitere Ausführung eines erfindungsgemäßen Ventilsitzes 1c ähnlich des Ventilsitzes 1b mit radial bezüglich der Axialrichtung A ausgerichteten Umlenkkanälen 17. Im Unterschied zu dem zuvor beschriebenen Ventilsitz 1b haben die tunnel- oder fensterartigen Umlenkkanäle 17 einen im Wesentlichen rechteckigen Querschnitt. Im Allgemeinen ist der unrunde Querschnitt der Umlenkkanäle betrachtet in einer zur jeweiligen radialen Orientierung entsprechenden Richtung der verschiedenen mehreren Umlenkkanäle 17 ist vorzugweise gleichförmig, insbesondere kongruent. Die Umlenkkanäle 17 des Ventilsitzes 1c können alternativ als schlitzförmig bezeichnet sein. Wie bei der vorigen Ausführung umfasst auch der Ventilsitz 1c in der abgebildeten Ausführung nur eine einzige axiale Reihe mit Umlenkkanäle 17. Die axiale Höhe der Umlenkkanäle 17 entspricht hier der Mündungsbereichsbreite.

Bei einem Ventilsitz 1c weisen die mehreren unrunden Umlenkkanäle 17, bevorzugt entlang der Axialrichtung A betrachtet, jeweils einen teilringförmigen Axialquerschnitt auf. Der teilringförmige Axialquerschnitt der verschiedenen mehreren Umlenkkanäle 17 ist bevorzugt als Teil eines Kreisrings ausgebildet, der sich insbesondere um einen Mittelpunkt des Kreisrings über einen Winkelbereich von höchstens 90°, bevorzugt höchstens 60° und besonders bevorzugt höchstens 45° oder höchstens 30° erstreckt. Der teilringförmige Axialquerschnitt der verschiedenen mehreren Umlenkkanäle 17 ist vorzugweise gleichförmig, insbesondere kongruent.

Ein anderes erfindungsgemäßes Hubventil 100 ist in Figur 4 abgebildet, bei dem die Umlenkung nicht durch Umlenkkanäle im Ventilsitz sondern durch ein Umlenkprofil im Innenhohlraum 50 des Ventilkolben 5 realisiert ist. Der Ventilsitz 2 kann konventionell ausgeführt sein. Das Hubventilglied 5 ist an einer Stellstange 125 gehalten, um es mittels eines nicht näher dargestellten Stellaktors, der an der Abdeckung 113a direkt oder indirekt befestigbar ist, zu betätigen. Die hier exemplarisch abgebildete Abdeckung 113a ist nicht wie oben als Laterne sondern als Deckel mit einer Durchführung für die Stellstange 125 gebildet.

Das Hubventilglied 5 umfasst einen tellerartigen, kreisförmigen Deckelabschnitt 59 zum Abdecken der Durchgangsöffnung 150. Außenumfänglich einem Hubventilglied 25 ist eine Schließfläche 53 vorgesehen, die dazu ausgelegt und eingerichtet ist, abdichtend mit der Anschlagfläche 13 des Ventilsitzes 2 zu kooperieren. Die Schließfläche 53 kann gemäß der Mantelfläche eines Kegelstumpfs (kurz: kegelstumpfförmig) geformt sein. In der Axialrichtung A unterhalb der Schließfläche 53 schließt ein zylinderhülsenförmiger Wandabschnitt 55 an. Die Innenseite 52 des Wandabschnitts 55 umgibt einen Innenhohlraum 50. In Bezug auf die Axialrichtung A radialorientierte Durchgangskanäle 57 durchdringen den Wandabschnitt. Die Dichte bzw. Gesamtfläche von Durchgangskanälen 57 nahe der Schließfläche 53 kann kleiner sein als die weiter von der Schließfläche 53 entfernte Durchgangskanäle 57, sodass nahe der Schließstellung des Hubventils 100 geringe Prozessfluidströmungen präzise regelbar sind. Der Axialbereich des Wandabschnitts, der durch die Durchgangskanäle 57 definiert ist, kann als Steuerabschnitt 56 bezeichnet werden. Vorzugsweise sind alle Durchgangskanäle 57 in diesem Steuerabschnitt 56 angeordnet. Das Umlenkprofil ist vorzugsweise in der Axialrichtung nach unten versetzt zu dem und/oder frei von einer axialen Überschneidung mit dem Steuerabschnitt 56 ausgeformt.

Außenseitig an dem zylinderhülsenförmigen Wandabschnitt 55 ist ein Führungsabschnitt 51 zum Abstützen des Hubventilglieds 5 in Radialrichtung an der Ventilsitz 2 in einer zumindest teilweise oder gegebenenfalls vollständig geöffneten Stellung des Hubventilglieds 5 vorgesehen. Das von der Schließfläche 53 entfernten Ende 60 des zylinderhülsenförmigen Wandabschnitts 55 und des Führungsabschnitt 51 kann, wie abgebildet frei von Durchgangskanälen 57 sein. Am unteren Ende 60 des Wandabschnitts 55 ist an dessen Innenseite 52 eine Vielzahl radialer Vorsprünge 63 und Rücksprünge 61 vorgesehen. Die radialen Rück- und Vorsprünge 61, 63 sind in Umfangsrichtung gleich groß und gleichmäßig verteilt. Die hier exemplarisch abgebildeten je acht Rück- und Vorsprünge 61, 63 wechseln sich gegenseitig ab. Die Vorsprünge 63 können durch massive Teile des Wandabschnitts 55 oder (nicht näher dargestellt) in der Radialrichtung in den Innenhohlraum 50 hervorstehende Nasen, Rippen, Schaufeln oder dergleichen gebildet sein. Die Rücksprünge 61 sind durch in Axialrichtung ausgerichtete Nuten bzw. Buchten gebildet, die beispielsweise subtraktiv (etwa: sparen Abheben) aus dem Vollmaterial des Wandabschnitts 55 abgetragen sein können. Die Axialerstreckung der Vorsprünge 63 und/oder Rücksprünge 61 realisiert einen Steuerabschnitt 56, der bei der hier abgebildeten bevorzugten Ausführung in der Axialrichtung A vollständig versetzt

In der in Figur 4 dargestellten geöffneten Stellung des Hubventils 100 fließt das Prozessfluid vom Einlasskanal 103 durch den unteren Arbeitsraum 102, sodann die mit dem Ventilsitz 2 und dem Hubventilglied 5 belegte Durchgangsöffnung 150, und von dort durch den oberen Arbeitsraum 104 zum Auslasskanal 107. Zu den Durchgangskanälen 57 des Hubventilglieds 5 fließt das Prozessfluid vom Einlasskanal 103 durch den Innenhohlraum 50 und den zylinderhülsenförmigen Wandabschnitt 55 des Ventilglieds 6. Im Innenhohlraum 50 ist das Umlenkprofil angeordnet. Das durch die Vorsprünge 63 und/oder Rücksprünge 61 gebildete Umlenkprofil kann bewirken, dass lateral zu dem Hauptströmungsbereich zusätzliche Prozessfluidströmung in das Hubventilglied 5 in der Axialrichtung A hineinfließt, welche am axial oberen Ende der Rücksprünge 61 in Querrichtung radial nach innen umgelenkt wird, sodass Querströmungs-Vektoren die Hauptströmung beeinflussen. Zusätzlich können die Vorsprünge 63 Strömungshindernissen für ein Umfangsrichtung orientierte Wirbelströmungen um die Stellstange in Achse realisieren, welche eine Wirbelbindung entgegenwirken und zur Auflösung bereits entstandener Wirbel hinwirken.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1a, 1b, 1c: Ventilsitz
- 2: Ventilsitz (nicht erfindungsgemäß)
- 5: Hubventilglied
- 6: Hubventilglied (nicht erfindungsgemäß)
- 10: Stirnende
- 11: Hülsenkörper
- 12: Innenraum
- 13: Anschlagfläche
- 15: Führungsfläche
- 16: Montageabschnitt
- 17: Umlenkkanal
- 18: Axialkanal
- 21: Innenwand
- 23: Außenwand
- 50: Innenhohlraum
- 51: Führungsabschnitt
- 52: Innenseite
- 53: Schließfläche
- 55: zylinderhülsenförmige Wandabschnitt
- 56: Steuerabschnitt
- 57: Durchgangskanäle
- 59: Deckelabschnitt
- 60: "unteres" axiales Ende
- 61: radialer Rücksprung
- 63: radialer Vorsprung
- 70: Mündungsöffnung
- 71: Einlassöffnung
- 72: Röhrenabschnitt
- 73: Mündungsbereich
- 100: Hubventil
- 101: Ventilgehäuse
- 102: unterer Arbeitsraum
- 103: Einlasskanal
- 104: oberer Arbeitsraum
- 105: Brückenabschnitt
- 107: Auslasskanal
- 109: Halsbereich
- 113a: Abdeckung
- 113b: Abdeckung
- 150: Durchgangsöffnung

- A: Axialrichtung
- M: Mittelachse
- b: Mündungsbereichsbreite
- s: Sockelabstand

## Patentansprüche

1. Ventilsitz (1) für ein Hubventil (100) einer prozesstechnischen Anlage, wie eine chemische Anlage, insbesondere eine petrochemische Anlage, ein Kraftwerk, eine Brauerei oder dergleichen, das ein Ventilgehäuse (101) umfasst, welches einen Einlasskanal (103), einen Auslasskanal (107), einen Brückenabschnitt (105) mit einer Durchgangsöffnung (150) und einem Halsbereich (109) umfasst, wobei der Ventilsitz (1) am Brückenabschnitt (105) montierbar ist, sodass die Durchgangsöffnung (150) mit einem zum Ventilsitz (1) korrespondierenden Hubventilglied (5, 6) verschließbar ist, umfassend:
einen hohlzylindrischen Hülsenkörper (11), der eine Axialrichtung (A) definiert,
eine am in Axialrichtung (A) oberen Bereich des Hülsenkörpers (11) angeordnete, insbesondere sich verjüngende, Anschlagfläche (13) zum schließenden Kooperieren mit einem relativ zum Ventilsitz (1) linear beweglichen Hubventilglied (5, 6),
eine im axialen Bereich des Brückenabschnitts (105) anzuordnende, sich von der Anschlagfläche (13) in Axialrichtung (A) unterhalb erstreckende, radial innenseitige Führungsfläche (15) zum Abstützen des Hubventilglieds (5, 6) an dem Ventilsitz (1) in einer zumindest teilweise geöffneten Stellung des Hubventilglieds (5, 6),
**dadurch gekennzeichnet, dass** der Hülsenkörper (11) wenigstens einen im Wesentlichen radial ausgerichteten Umlenkkanal (17) aufweist, der an der Führungsfläche (15) mündet, um Prozessfluid zu einem, insbesondere in einen, radialen Innenhohlraum (50) des Hubventilglieds (5, 6) zu führen, um innerhalb des Innenhohlraum (50) angeordnetes Prozessfluid umzulenken und/oder um eine Hauptströmungsrichtung des Prozessfluids im Bereich der Durchgangsöffnung (150) zu beeinflussen.

2. Ventilsitz (1) nach Anspruch 1, **dadurch gekennzeichnet, dass** ein vom unteren Stirnende (10) des Hülsenkörpers (11) zum Umlenkkanal (17) führender, insbesondere ringnutförmiger, Axialkanal (18) radial zwischen der Führungsfläche (15) und dem Brückenabschnitt (105) und/oder einem Montageabschnitt (16) angeordnet ist, wobei insbesondere sich der Umlenkkanal (17) vom Axialkanal (18) zur Führungsfläche (15) erstreckt.

3. Ventilsitz (1) nach Anspruch 2, **dadurch gekennzeichnet, dass** mehrere Umlenkkanäle (17) in den gleichen, insbesondere einzigen, Axialkanal (18) münden.

4. Ventilsitz (1) nach einem der vorstehenden Ansprüche, dadurch **gekennzeich** - **net**, dass der wenigstens eine Umlenkkanal (17) einen runde, insbesondere kreisförmige, oder polygonale Querschnittsfläche aufweist.

5. Ventilsitz (1) nach einem der vorstehenden Ansprüche, dadurch **gekennzeich**- **net**, dass der Hülsenkörper einen in Axialrichtung (A) unterhalb der Anschlagfläche (13) angeordneten, radial außenseitigen Montageabschnitt (16) zum Befestigen des Ventilsitzes an einem Ventilgehäuse (101) umfasst, wobei insbesondere die Führungsfläche (15) in der Axialrichtung (A) zumindest teilweise im Bereich des Montageabschnitts (16) angeordnet ist.

6. Ventilsitz (1) nach Anspruch 5, **dadurch gekennzeichnet, dass** Umlenkkanal (17) in der Axialrichtung (A) im Bereich des Montageabschnitts (16) angeordnet ist.

7. Ventilsitz (1) nach einem der vorstehenden Ansprüche, **dadurch gekennzeichnet, dass** der Hülsenkörper mehrere Umlenkkanäle (17) aufweist, wobei radial innere Mündungsöffnungen (70) der mehreren Umlenkkanäle (17), insbesondere in Umfangsrichtung und/oder um eine Mittelachse des Hülsenkörpers betrachtet, an der Führungsfläche (15), vorzugsweise gleichmäßig, verteilt angeordnet sind.

8. Ventilsitz (1) nach Anspruch 7, **dadurch gekennzeichnet, dass**, die Mündungsöffnungen (70) in einem Mündungsbereich angeordnet sind, der sich in der Axialrichtung (A) über die vorzugsweise konstante Bereichsbreite (b) erstreckt, wobei der unmittelbar am unteren axialen Stirnende (10) des Hülsenkörpers (11) beginnt oder der bei einem vorzugsweise konstanten Sockelabstand (s) zum unteren axialen Stirnende (10) beginnt.

9. Hubventilglied (5) für ein Hubventil (100) einer prozesstechnischen Anlage, wie eine chemischen Anlage, insbesondere eine petrochemischen Anlage, ein Kraftwerk, eine Brauerei oder dergleichen, das ein Ventilgehäuse (101) umfasst, welches einen Einlasskanal (103), einen Auslasskanal (107), einen Brückenabschnitt (105) mit einer Durchgangsöffnung (150) und einem Halsbereich (109) umfasst, wobei ein Ventilsitz (1, 2) am Brückenabschnitt (105) montierbar ist, umfassend:
eine, insbesondere sich verjüngende, Schließfläche (53) zum schließenden Kooperieren mit einer Anschlagfläche (13) eines Ventilsitzes (1, 2),
ein in Axialrichtung (A) oberhalb der Schließfläche (53) angeordneter kreisförmiger Deckelabschnitt (59);
ein in Axialrichtung (A) unterhalb der Schließfläche (53) angeordneter zylinderhülsenförmiger Wandabschnitt (55), dessen Innenseite (52) einen Innenhohlraum (50) umgibt, wobei der Wandabschnitt eine Vielzahl von radialen Durchgangskanälen (57) für das Prozessfluid aufweist, wobei der zylinderhülsenförmige Wandabschnitt (5) einen Führungsabschnitt (51) zum Abstützen des Hubventilglieds (5) an dem Ventilsitz (1, 2) in einer zumindest teilweise geöffneten Stellung des Hubventilglieds (5) umfasst,
**dadurch gekennzeichnet, dass** das Hubventilglied (5) ein Umlenkprofil für innerhalb des Innenhohlraums (50) angeordnetes Prozessfluid umfasst, insbesondere um eine Hauptströmungsrichtung des Prozessfluids im Bereich der Durchgangsöffnung (150) zu beeinflussen.

10. Hubventilglied (5) nach Anspruch 9, **dadurch gekennzeichnet, dass** das Umlenkprofil wenigstens einen an der Innenseite (52) angeordneten radialen Rücksprung (61) und/oder radialen Vorsprung (63) umfasst.

11. Hubventilglied (5) nach Anspruch 10, **dadurch gekennzeichnet, dass** mehrere Vor- und/oder Rücksprünge, insbesondere in Umfangsrichtung und/oder um eine Mittelachse des Hülsenkörpers betrachtet, gleichmäßig verteilt, an der Innenseite (52) des zylinderhülsenförmigen Wandabschnitts (55) angeordnet sind.

12. Hubventilglied (5) nach Anspruch 10 oder 11, **dadurch gekennzeichnet, dass** der wenigstens eine radiale Vorsprung (63) und/oder Rücksprung (61) sich am unteren axialen Ende (60) beginnend in Axialrichtung (A), insbesondere geradlinig, in dem Innenhohlraum erstreckt, insbesondere bis hin zu den Durchgangskanälen (57), vorzugsweise teilweise oder vollständig in dem Führungsabschnitt (51).

13. Hubventilglied (5) nach einem der Ansprüche 9 bis 12, **dadurch gekennzeichnet, dass** der Wandabschnitt (55) einen Steuerabschnitt (56) aufweist, in dem die radialen Durchgangskanälen (57), insbesondere alle, angeordnet sind, wobei der Steuerabschnitt (56) in Axialrichtung, insbesondere vollständig, zwischen dem Führungsabschnitt (51) und dem Deckelabschnitt (59) angeordnet ist.

14. Hubventilglied (5) nach Anspruch 13, **dadurch gekennzeichnet, dass** das Umlenkprofil zumindest teilweise, insbesondere überwiegend oder vollständig, im Führungsabschnitt (51) angeordnet ist, wobei insbesondere der Führungsabschnitt (51) frei von Durchgangskanälen (57) ist.

15. Hubventil (100) für eine prozesstechnischen Anlage, wie eine chemischen Anlage, insbesondere eine petrochemische Anlage, ein Kraftwerk, eine Brauerei oder dergleichen, mit einem Ventilgehäuse (101), welches einen Einlasskanal (103), einen Auslasskanal (107), einen Brückenabschnitt (105) mit einer Durchgangsöffnung (150) und einen Halsbereich (109) aufweist, mit einem in dem Brückenabschnitt (105) angeordneten Ventilsitz (1, 2), insbesondere nach einem der Ansprüche 1 bis 8, mit einem mit dem Ventilsitz (1, 2) kooperierenden Hubventilglied (5, 6), insbesondere nach einem der Ansprüche 9 bis 14, das einen zylindrischen Innenhohlraum (50) umfasst, wobei das Hubventilglied (5, 6) in Axialrichtung (A) relativ zu dem Ventilsitz (1, 2) beweglich ist, **gekennzeichnet durch** eine Umlenkung, wie ein Umlenkprofil an dem Hubventilglied (5, 6) und/oder einen Umlenkkanal (17) an oder in dem Ventilsitz (1, 2), zum Umlenken von innerhalb des Innenhohlraums (50) angeordnetem Prozessfluid und/oder zum Beeinflussen einer Hauptströmungsrichtung des Prozessfluids im Bereich der Durchgangsöffnung (150).
